# FASCICULE DE BREVET EUROPEEN

(11) **EP 0 881 527 B1**
(45) Date de publication et mention de la délivrance du brevet: **28.01.2009**
(21) Numéro de dépôt: 98401236.9
(22) Date de dépôt: 25.05.1998
(51) Int. Cl.: G02F 1/33

(54) **Système de commutation optique spatiale à déflecteur acousto-optique multicanaux**
Räumliches optisches Schaltsystem mit akustooptischem Mehrkanal-Ablenker
Spatial optical switching system using a multichannel acousto-optic deflector

(30) Priorité: 26.05.1997 FR 9706375
(43) Date de publication de la demande: 02.12.1998
(73) Titulaire: FRANCE TELECOM, 75015 Paris (FR)
(72) Inventeur: Gosselin, Stéphane, 22560 Pleumeur-bodou (FR); Sapriel, Jacques, 92120 Montrouge (FR)
(74) Mandataire: Joly, Jean-Jacques

(56) Documents cités:
- HARRIS D O ET AL: "ACOUSTO-OPTIC PHOTONIC SWITCH" OPTICS LETTERS, vol. 14, no. 21, 1 novembre 1989, pages 1177-1179, XP000080697
- PATENT ABSTRACTS OF JAPAN vol. 011, no. 337 (P-633), 5 novembre 1987 & JP 62 121427 A (NIPPON TELEGR & TELEPH CORP), 2 juin 1987
- PATENT ABSTRACTS OF JAPAN vol. 011, no. 373 (P-643), 5 décembre 1987 & JP 62 143033 A (NEC CORP), 26 juin 1987
- PATENT ABSTRACTS OF JAPAN vol. 006, no. 100 (P-121), 9 juin 1982 -& JP 57 034529 A (SHIMADZU CORP), 24 février 1982

## Description

La présente invention concerne les systèmes de commutation optique spatiale à déflecteur acousto-optique multicanaux.

Le système proposé par l'invention est avantageusement utilisé dans le domaine des télécommunications optiques, notamment pour interconnecter de manière reconfigurable des barrettes de fibres optiques monomodes transportant des informations sous forme optique à la longueur d'onde de 1,55 ou de 1,3 µm.

### ARRIERE-PLAN TECHNOLOGIQUE DE L'INVENTION

- Les fibres optiques monomodes permettent de transporter sous forme optique des débits d'information de plus en plus élevés. La commutation de ces signaux optiques au niveau des noeuds des réseaux de télécommunications optiques nécessite actuellement de convertir les signaux optiques en signaux électriques qui sont ensuite traités électroniquement puis reconvertis en signaux optiques à la sortie du commutateur. Ce traitement électronique complexe de gros volumes d'informations peut devenir un goulot d'étranglement pour les réseaux de télécommunications futurs.

Aussi, des systèmes de commutation optique traitant directement et de manière transparente les signaux optiques constituent des alternatives aux systèmes électroniques lorsque les débits d'informations manipulés sont très importants et que le démultiplexage de ces informations n'est pas nécessaire.

On connaît notamment déjà des systèmes de commutation optique spatiale. Par exemple, un système de commutation optique spatiale N x N permet d'interconnecter de manière reconfigurable deux ensembles de N fibres optiques, chacune des N fibres optiques d'entrée pouvant être reliée optiquement, via un canal du commutateur, à n'importe quelle fibre de sortie disponible. Des caractéristiques importantes d'un système de commutation spatiale sont le nombre de composants élémentaires nécessaire, la complexité de l'algorithme de reconfiguration du commutateur, les pertes d'insertion (atténuation du signal optique au passage du commutateur) et le bruit de diaphotie (signaux parasites provenant de canaux différents et liés à une isolation imparfaite entre les canaux).

Les systèmes de commutation optique spatiale peuvent être classés suivant le type de topologie utilisé.

Notamment, les architectures multi-étages consistent à cascader un certain nombre d'étages de commutation élémentaire 1x2, 2x2, et/ou 2x1 de façon à obtenir des systèmes de plus grande capacité NxN avec N>2. Ce type d'architectures modulaires est bien adapté à certaines technologies optiques intégrées mais impose un compromis entre le nombre de commutateurs élémentaires (qui est au moins de l'ordre de N.log₂N) et la complexité de l'algorithme de reconfiguration du commutateur. De plus, comme le signal optique passe par plusieurs étages de commutation élémentaire, les pertes d'insertion et/ou le bruit de diaphotie peuvent devenir importants lorsque la capacité N dépasse 8.

Les architectures de diffusion-obturation n'utilisent quant à elles qu'un seul étage de commutation. Elles consistent, pour chaque entrée, à répartir uniformément la puissance optique vers chaque sortie et à obturer les sorties non voulues. L'algorithme de reconfiguration est très simple mais le nombre de composants élémentaires est de l'ordre de N2. De plus, les pertes d'insertion et/ou le bruit de diaphotie peuvent devenir importants à grande capacité.

Enfin, les architectures de déflexion consistent à diriger activement chaque entrée vers la sortie voulue. Elles comportent un seul étage de commutation. L'algorithme de reconfiguration est très simple et le nombre de composants élémentaires est de l'ordre de N. Les pertes d'insertion et le bruit de diaphotie ne dépendent pas a priori de la capacité.

Le système proposé par l'invention est un système de commutation par déflexion acousto-optique : il fait partie de la dernière catégorie.

Les déflecteurs acousto-optiques utilisent la propagation d'ondes ultrasoniques dans certains matériaux pour défléchir un faisceau lumineux. Pour une présentation générale de ces déflecteurs, on pourra avantageusement se référer à :
[1] J. Sapriel : Acousto-optics (Wiley, New York, 1979).

La production d'ondes ultrasoniques est assurée par un transducteur piézo-électrique alimenté par un signal électrique haute fréquence. L'onde ultrasonique se propage perpendiculairement à la surface du transducteur et déforme localement le matériau acousto-optique. Ces déformations, par effet photoélastique, induisent des variations de l'indice optique du matériau et engendrent donc un réseau de diffraction capable de défléchir un faisceau lumineux. L'efficacité de déflexion dépend de la longueur d'onde, des dimensions du transducteur, de la puissance ultrasonique, et d'un coefficient appelé facteur de mérite du matériau. Ce coefficient est lié au matériau et à la configuration de l'interaction acousto-optique dans le matériau. L'efficacité de déflexion est d'autant plus grande que le facteur de mérite du matériau est grand. L'angle de déflexion est proportionnel à la fréquence ultrasonique utilisée, et il est donc relativement simple de reconfigurer le déflecteur. Le temps de reconfiguration est lié à la vitesse des ondes ultrasoniques et au diamètre du faisceau optique, et peut être typiquement très inférieur à la microseconde.

### ART ANTERIEUR

Des architectures de commutation optique spatiale par déflexion acousto-optique ont déjà été proposées notamment dans :
[2] "Acousto-optic photonic switch", Dan Owen Harris and A. Vanderlugt, Optics Letters, Vol. 14, No. 21, pp 1177-1179 (1989), ce document formant l'état de la technique le plus proche,
[3] "Demonstration of a photonic space switch utilizing acousto-optic elements", W.E. Stephens, P.C. Huang, T.C. Banwell, L.A. Reith, and S.S. Cheng, Optical Engineering, Vol. 29, No. 3, pp 183-190 (1990),
[4] "Multichannel acousto-optic crossbar switch", Dan Owen Harris, Applied Optics, Vol 30, No. 29, pp 4245-4256 (1991).

Ces architectures, dites "vecteur-matrice" ou "crossbar" selon la terminologie anglo-saxonne, utilisent un déflecteur acousto-optique multicanaux et permettent d'interconnecter deux barrettes de N fibres optiques (N = 4 ou 8 dans les références [2],[3],[4]). Chaque canal du déflecteur est matérialisé sur la face supérieure du cristal acousto-optique par son propre transducteur piézo-électrique et est associé à une des entrées optiques du système, ce qui permet effectivement de contrôler indépendamment la destination de chacun des faisceaux optiques d'entrée. Comme les ondes ultrasoniques se propagent ici perpendiculairement au plan défini par la barrette de fibres d'entrée, les faisceaux optiques défléchis se répartissent sur une matrice de points. Une lentille - qui selon les cas est cylindrique ou sphérique - placée à une distance du déflecteur multicanaux correspondant à la distance focale de ladite lentille (configuration dite de Fourier) redresse les faisceaux optiques dans l'axe de la lentille qui est parallèle à l'axe des fibres.

Dans la publication [2], cette lentille est une lentille sphérique qui permet une réinjection dans l'axe des fibres de sortie dans le cas d'un système 1 x N.

On notera toutefois que l'architecture proposée dans cette publication ne comporte qu'une seule entrée optique et n'autorise de manière efficace que des commutations 1 x N.

En effet, dans le cas d'un système à plusieurs entrées optiques, une architecture comportant une lentille de Fourier sphérique ne permet pas que la réinjection dans les fibres de sortie se fasse dans l'axe des fibres, ce qui induit des pertes d'injection prohibitives lorsque les fibres de sortie sont monomodes. Pour minimiser les pertes d'injection, il est alors nécessaire d'utiliser des lentilles cylindriques supplémentaires, ce qui complique l'architecture du système.

Ainsi, dans la publication [4], deux lentilles cylindriques sont ajoutées en amont du déflecteur et il est proposé de remplacer la lentille sphérique de Fourier par deux lentilles cylindriques de focales différentes. Mais, même avec des focales optimales, l'efficacité de réinjection dans des fibres monomodes de sortie est inférieure à 1/N.

Une autre technique proposée pour acheminer les faisceaux vers la barrette de fibres de sortie - qui correspond à l'architecture décrite dans [3] - consiste à utiliser une lentille de Fourier cylindrique et N fibres lentillées pour chaque port de sortie, soit un total de N² fibres organisées en matrice, suivies par des coupleurs passifs fibrés N vers 1. Toutefois, là encore, les pertes liées aux coupleurs limitent l'efficacité de réinjection en sortie à 1/N.

Ainsi, en particulier dans le cas où les fibres de sortie sont de type monomode - ce qui est bien entendu souhaitable pour l'intégration du système dans un réseau de télécommunication optique, puisque le signal optique est généralement transporté dans des fibres monomodes - les architectures utilisées pour la réinjection donnent des résultats médiocres qui ne permettent pas d'envisager un nombre de fibres par barrettes dépassant 4.

Le but principal de l'invention est de proposer une architecture simple permettant de résoudre le problème posé par la réinjection de la lumière dans des fibres en sortie d'un commutateur à déflecteur acousto-optique multicanaux.

Par ailleurs, une caractéristique vivement souhaitable pour un système de télécommunications optiques est d'être insensible à la polarisation de la lumière. Or, de manière générale, beaucoup de systèmes de commutation optique spatiale étudiés jusqu'ici ont une sensibilité à la polarisation de l'ordre de, ou supérieure à, 1 décibel. L'interaction acousto-optique est, elle aussi, sensible à la polarisation. Ainsi, la sensibilité à la polarisation du système présenté dans [3] est de 0,8 décibels. Si ce chiffre reste faible, il peut tout de même limiter fortement la cascadibilité de tels systèmes dans un réseau de télécommunications.

Un autre but de l'invention encore est donc de proposer un système de commutation optique spatiale qui soit indépendant de la polarisation et ce même si le matériau d'interaction acousto-optique est sensible à la polarisation.

Egalement, un autre inconvénient des systèmes à déflecteur acousto-optique multicanaux connus à ce jour apparaît lorsque l'on veut commuter des signaux optiques aux longueurs d'onde de télécommunications. En effet, les systèmes déjà étudiés travaillent à des longueurs d'onde visibles ou du proche infrarouge, et les matériaux acousto-optiques employés, tels l'oxyde de tellure ou le phosphure de gallium, ne sont pas adaptés aux longueurs d'onde de télécommunications du fait des faibles efficacités de déflexion obtenues à ces longueurs d'onde.

Un autre but de l'invention encore est donc de résoudre ce problème.

Par ailleurs, un autre but encore de l'invention est de réduire le bruit de diaphotie des systèmes de l'état de l'art antérieur.

### PRESENTATION DE L'INVENTION

L'invention propose quant à elle un système de commutation optique spatiale tel que définit à la revendication 1.

Un tel système permet une réinjection de bonne qualité dans les fibres de sortie qu'elles soient monomodes ou multimodes, tout en étant d'une architecture simple puisqu'il ne nécessite qu'une seule lentille de Fourier et non plusieurs lentilles cylindriques.

Avantageusement, la lentille de Fourier est invariante par rotation autour de son axe optique. Les faisceaux optiques restent par conséquent circulaires durant tout leur trajet dans le système. Il n'y a pas de manipulation de faisceaux elliptiques qui compliquerait le système optique et le réglage de son alignement.

De façon plus générale, le sous-ensemble d'entrée constitué de la pluralité de fibres et microlentilles d'entrée, ainsi que du déflecteur disposé au plan focal objet de la lentille de Fourier est identique au sous-ensemble constitué de la pluralité de fibres et microlentilles de sortie, ainsi que du déflecteur disposé au plan focal image de la lentille de Fourier.

Cette symétrie simplifie à la fois le processus de fabrication et l'électronique de commande du système.

De préférence également, les déflecteurs de part et d'autre de la lentille sont tournés de 90° l'un par rapport à l'autre autour de l'axe optique de la lentille de Fourier.

De ce fait, le système présente l'avantage d'être insensible à la polarisation de la lumière.

Dans une architecture particulièrement avantageuse, le système comporte une pluralité de modules constitués de systèmes dont la lentille de Fourier est commune.

### PRESENTATION DES FIGURES

D'autres caractéristiques et avantages de l'invention ressortiront encore de la description qui suit. Cette description est purement illustrative et non limitative. Elle doit être lue en regard des dessins annexés sur lesquels :
- la figure 1 est une représentation schématique en perspective illustrant un mode de réalisation élémentaire (module) de l'invention ;
- les figures 2a et 2b sont des représentations schématiques respectivement en vue de dessus et en vue de côté du système de la figure 1 ;
- les figures 3a et 3b illustrent un autre mode de réalisation de l'invention également possible dans lequel plusieurs modules élémentaires du type de celui de la figure 1 sont regroupés de manière optimale.

### DESCRIPTION DÉTAILLÉE

### Exemple d'un mode de réalisation élémentaire (module)

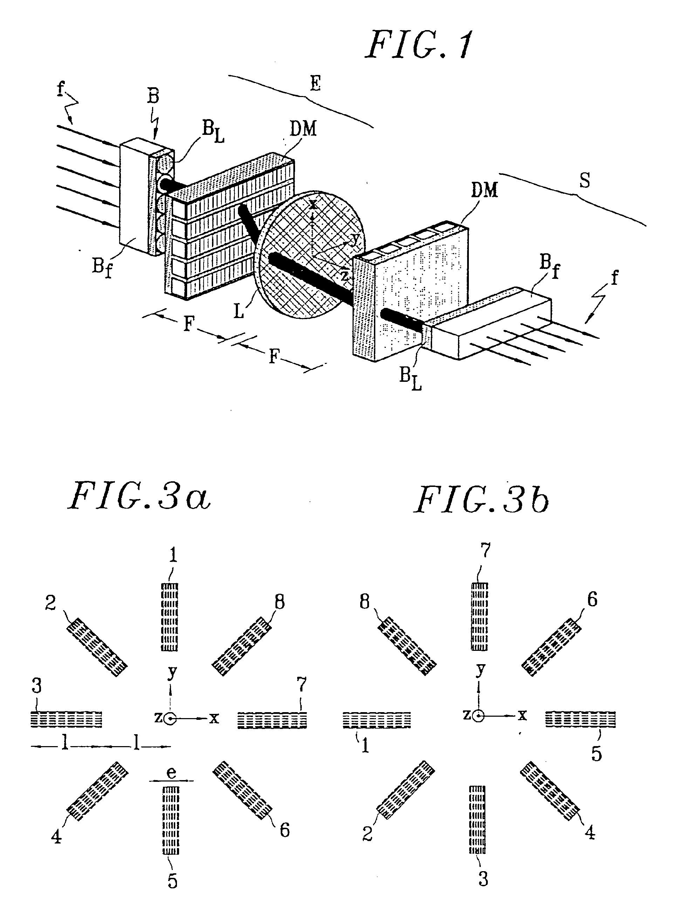

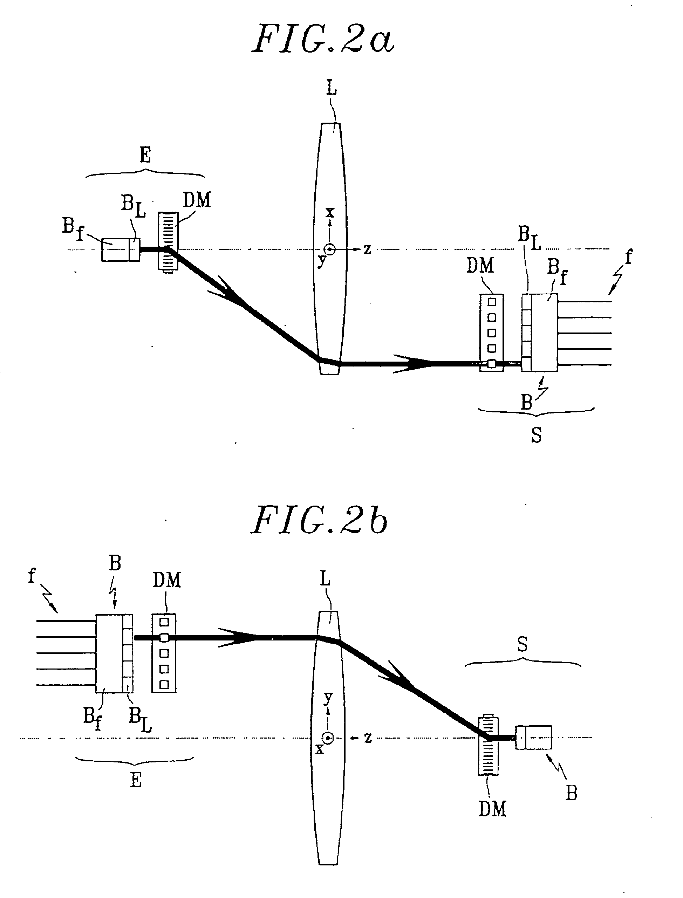

Le module illustré sur les figures 1 et 2a, 2b est constitué d'un sous-ensemble d'entrée E, d'une lentille sphérique L, ainsi que d'un sous-ensemble de sortie S.

Le sous-ensemble de sortie S est identique au sous-ensemble d'entrée E. Les deux sous-ensembles E et S sont répartis de part et d'autre de la lentille L et sont tournés l'un par rapport à l'autre de 90° autour de l'axe optique Z de ladite lentille L. Plus exactement, ils se déduisent l'un de l'autre par une symétrie par rapport au plan de la lentille suivie d'une rotation de π/2 par rapport à l'axe Z. Ainsi, les fréquences ultrasoniques à utiliser dans le sous-ensemble de sortie S sont les mêmes que celles utilisées dans le sous-ensemble d'entrée E. La symétrie du module permet d'inverser les rôles des entrées-sorties.

Chaque sous-ensemble d'entrée E ou de sortie S est composé d'une barrette B_{f} de N fibres monomodes f, d'une barrette B_{L} de N microlentilles et d'un déflecteur acousto-optique multicanaux DM.

La barrette B_{f} et la barrette B_{L} sont assemblées par exemple par collage, pour constituer une barrette d'entrée/sortie référencée par B sur la figure. Le nombre de fibres par barrette peut aller typiquement jusqu'à 16.

La barrette B_{L} de microlentilles permet de collimater les faisceaux d'entrée et de focaliser les faisceaux de sortie sur les fibres f. Cette collimation permet de maîtriser les faisceaux sur une certaine distance et de maximiser le nombre de directions de déflexion des déflecteurs multicanaux DM, c'est-à-dire le nombre N de fibres f par barrette B d'entrée/sortie.

On utilise par exemple l'arséniure de gallium comme matériau acousto-optique pour les déflecteurs DM.

L'arséniure de gallium permet en effet d'obtenir des facteurs de mérite élevés. Pour une présentation générale des propriétés acousto-optiques de l'arséniure de gallium, on pourra avantageusement se référer à :
[5] "Elasto-optic and electro-optic properties of GaAs", N. Suzuki and K. Tada, Japanese Journal of Applied Physics, Vol. 23, 1011 (1984).

L'arséniure de gallium donne des efficacités de déflexion de l'ordre de 20 % aux longueurs d'onde de télécommunications, ce pour un système 8x8 et pour des puissances ultrasoniques de l'ordre de 1 Watt par canal.

En variante, on pourra également, pour des efficacités comparables, utiliser du phosphure d'indium, dont les propriétés acousto-optiques sont par exemple présentées dans :
[6] "Electro-optic properties and Raman scattering in InP", N. Suzuki and K. Tada, Japanese Journal of Applied Physics, Vol. 23, 291 (1984).

Cependant, ainsi que cela a été souligné dans :
[7] "New developments of resonant acousto-optics in semiconductors", J. Sapriel, P. Renosi, and P. Le Berre, SPIE Vol. 2643, pp 257-262 (1995),
   l'arséniure de gallium possède de meilleures propriétés mécaniques, se prête mieux au polissage nécessaire à la fabrication des déflecteurs et présente moins d'atténuation acoustique (environ 3 dB/cm à la fréquence de 400 MHz, contre 13 dB/cm pour le phosphure d'indium à la même fréquence). Il est donc préféré.

L'architecture présentée pourrait bien entendu trouver application à des longueurs d'onde différentes des longueurs d'onde de télécommunications, en utilisant éventuellement d'autres matériaux acousto-optiques.

Notamment, on pourra également avantageusement utiliser des alliages semiconducteurs III-V ou II-VI par exemple dans des conditions proches de la résonance acousto-optique permettant des efficacités de déflexion nettement supérieures à celle de l'Arséniure de Gallium aux longueurs d'ondes de télécommunications de 1,3 et 1,55 µm.

Les transducteurs des déflecteurs DM sont quant à eux fabriqués en niobate de lithium (coupe Y+36°), ce matériau présentant de très bonnes performances piézo-électriques.

Les déflecteurs DM et la lentille L sont disposés selon une configuration de Fourier, ce qui signifie que les déflecteurs DM sont disposés de part et d'autre de la lentille L, à une distance de celle-ci correspondant à sa distance focale F.

Dans la suite du texte, on désigne par X et Y deux directions selon lesquelles s'étendent les barrettes B de sortie et d'entrée, ces directions X et Y définissant avec l'axe optique Z de la lentille L un repère orthonormé.

Ladite lentille L assure trois fonctions.
a) Elle convertit les angles de déflexion dans le plan X-Z des faisceaux en sortie du déflecteur multicanaux DM d'entrée en des positions en X sur le module S de sortie (figure 2a). La projection sur le plan X-Z des faisceaux en sortie de la lentille L est en effet parallèle à l'axe Z de ladite lentille L. Ainsi, on fait correspondre à chaque angle de déviation par le déflecteur multicanaux d'entrée un canal de la barrette B de sortie. De la sorte, une relation biunivoque est établie entre les fréquences ultrasoniques du déflecteur d'entrée et les canaux de sortie : pour assurer la liaison d'une entrée i vers une sortie j, il faut utiliser une fréquence ultrasonique f(j) sur le canal i du déflecteur d'entrée.
b) Dans le plan Y-Z, la lentille L défléchit vers la barrette B de sortie les faisceaux qu'elle reçoit du module E d'entrée (faisceaux dont les projections dans le plan Y-Z sont parallèles à l'axe optique Z) (cf. figure 2b) en convertissant les positions d'incidence des faisceaux le long de l'axe Y sur la lentille L en des angles d'incidence sur le sous-ensemble S de sortie. Cette conversion est symétrique de la précédente. Le déflecteur multicanaux DM de sortie redresse ensuite les faisceaux dans l'axe des fibres de sortie (axe Z). De la sorte, une relation biunivoque est établie entre les fréquences ultrasoniques du déflecteur de sortie et les canaux d'entrée. Cette relation biunivoque est exactement la même que celle qui existe entre les fréquences ultrasoniques du déflecteur d'entrée et les canaux de sortie : pour la liaison entrée i vers sortie j, il faut utiliser la fréquence f(i) sur le canal j du déflecteur de sortie.
c) Une dernière fonction de la lentille L est de collimater les faisceaux afin qu'ils aient la même taille dans le déflecteur de sortie que dans le déflecteur d'entrée.

On notera que ces trois fonctions sont effectivement assurées dans une configuration de Fourier par une lentille convergente invariante par rotation autour de son axe optique (par exemple sphérique) lorsque les angles des faisceaux avec l'axe optique de la lentille restent suffisamment faibles (approximation paraxiale). Cette condition est typiquement remplie avec les déflecteurs DM utilisés ici.

On notera par ailleurs que la symétrie entrées-sorties du système apparaît non seulement au niveau géométrique, mais aussi au niveau de la commande du commutateur. Les deux déflecteurs multicanaux utilisent le même "peigne" de fréquences ultrasoniques f(j), j variant de 1 à N (N = nombre de fibres par barrette). Pour établir une liaison de l'entrée i vers la sortie j, il suffit d'utiliser la fréquence ultrasonique f(j) sur le canal i du déflecteur d'entrée, et la fréquence f(i) sur le canal j du déflecteur de sortie. Enfin, toutes les surfaces optiques rencontrées par le faisceau lumineux sont recouvertes de préférence de couches anti-réfléchissantes pour minimiser les pertes par réflexion à la longueur d'onde de travail.

### Exemple d'un mode de réalisation multiple (intégrant plusieurs modules)

On se réfère maintenant aux figures 3a et 3b sur lesquelles on a illustré un autre mode de réalisation possible.

On sait que des contraintes de bande de fréquence électrique des transducteurs piézo-électriques se traduisent par des contraintes sur les angles de déflexion des déflecteurs multicanaux. Ainsi, l'angle de déflexion maximal est typiquement le double de l'angle de déflexion minimal. Les angles de déflexion, multipliés par la distance focale F de la lentille L, donnent les positions des canaux des déflecteurs par rapport à l'axe optique de ladite lentille. Ainsi, le sous-ensemble de sortie S et le sous-ensemble d'entrée E ne sont pas centrés sur l'axe optique Z de la lentille L, mais décalés par rapport à lui, la distance entre cet axe et le premier canal des déflecteurs étant typiquement égale à la largeur 1 des déflecteurs.

On sait également que le système élémentaire décrit en référence aux figures 1 et 2a, 2b est invariant par rotation simultanée des sous-ensembles E et S autour de l'axe Z de la lentille L.

Ces deux considérations permettent de disposer plusieurs sous-ensembles d'entrée E et plusieurs sous-ensembles de sortie S autour de l'axe optique Z de la lentille L de Fourier, dans une configuration que l'on peut appeler "barillet", c'est à dire dans laquelle une pluralité de déflecteurs multicanaux DM d'entrée est répartie en étoile dans le plan focal objet de la lentille L autour de l'axe optique Z de ladite lentille, tandis qu'un même nombre de déflecteurs multicanaux DM de sortie est réparti dans le plan focal image de la lentille L, selon une configuration complémentaire de celle des déflecteurs d'entrée. Cette juxtaposition est effectivement possible si l'on contrôle l'encombrement des déflecteurs multicanaux.

Dans l'exemple illustré sur les figures 3a et 3b, le nombre de déflecteurs d'entrée, c'est-à-dire de déflecteurs de sortie, est de M = 8 pour N = 8 fibres par barrette.

Sur la figure 3a, on a référencé de 1 à 8 les déflecteurs multicanaux d'entrée et de 1' à 8' les déflecteurs multicanaux de sortie correspondant respectivement aux déflecteurs 1 à 8, ces déflecteurs 1' à 8' étant décalés de π/2 dans le plan X-Y par rapport aux positions respectives des déflecteurs 1 à 8.

On réalise ainsi un système qui comprend 8 commutateurs 8x8 dans un volume sensiblement identique à celui d'un commutateur 8x8 de la variante des figures 1 et 2a, 2b. On voit sur les figures 3a et 3b que l'encombrement des déflecteurs multicanaux ne pose pas de problème si leur largeur 1 (dimension associée au nombre de canaux) est plus grande que leur épaisseur e (dimension dans la direction de propagation ultrasonique). En pratique, comme les faisceaux lumineux utilisés sont circulaires, le rapport l/e est de l'ordre du nombre N de fibres par barrette, et il est donc aisé de juxtaposer jusqu'à M = 8 déflecteurs multicanaux autour de l'axe optique de la lentille L, à une distance de l'axe égale à la largeur 1 des déflecteurs.

### Exemple de dimensionnement

Le tableau suivant donne un exemple de dimensionnement effectué pour un nombre N de fibres monomodes par barrette égal à 8. Le matériau acousto-optique est l'arséniure de gallium, et la longueur d'onde est de 1,55 µm.

Des dimensionnements similaires seraient obtenus avec du phosphure d'indium et/ou à la longueur d'onde de 1,31 microns ou encore avec des fibres multimodes en sortie.

Egalement, le nombre de fibres par barrette peut être augmenté jusqu'à 16, voire 32, avec en contrepartie une augmentation des dimensions du système et une moindre efficacité des déflecteurs multicanaux.

Ce dimensionnement est bien sûr valable aussi bien pour un système simple 8 x 8 que pour un système multiple Mx(8x8), M pouvant aller jusqu'à 8. Les valeurs données sont indicatives (précision de l'ordre de 10 %).

**TABLEAU 1 : Exemple de dimensionnement pour l'architecture proposée**

| | |
|---|---|
| Nombre de fibres par barrette N | 8 |
| Espacement des fibres sur les barrettes (mm) | 0,75 |
| Focale des microlentilles de collimation (mm) | 2 |
| Diamètre des faisceaux optiques (mm) | 0,4 |
| Focale de la lentille de Fourier (mm) | 90 |
| Diamètre de la lentille de Fourier (mm) | 25 |
| Dimensions du système des figures 3a et 3b (8 modules) (mm) | 200x25x25 |
| Dimensions des faisceaux acoustiques (mm) | 1,5x0,6 |
| Bande de fréquences ultrasoniques (MHz) | 200-400 |
| Efficacité moyenne des déflecteurs multicanaux (pour 1 Watt ultrasonique par canal) (%) | 20 |
| Rapport signal à diaphotie estimé (dB) | 60 |
| Temps d'accès typique (µs) | 0,2 |

### Avantages des architectures proposées

Les systèmes qui viennent d'être décrits présentent de nombreux avantages.

Notamment, ils présentent les avantages des architectures de commutation optique spatiale de type vecteur-matrice utilisant la déflexion acousto-optique.

Egalement, ils permettent de résoudre les inconvénients des structures de l'art antérieur

Notamment, ils sont très performants en termes de réinjection de la lumière dans les fibres monomodes de sortie, et ce sans nécessiter de lentilles cylindriques dans le montage optique ce qui évite la manipulation de faisceaux elliptiques et facilite l'alignement.

Par ailleurs, les contraintes de focalisation des faisceaux par la lentille de Fourier sont relâchées. Ce sont les microlentilles de sortie qui assurent la focalisation.

On notera également qu'une caractéristique intrinsèque de l'architecture proposée est son insensibilité à la polarisation, et ce même si le matériau acousto-optique utilisé est sensible à la polarisation (ce qui arrive fréquemment). Ceci est dû au fait que les directions de propagation acoustique dans les deux déflecteurs sont-orthogonales.

Par ailleurs, un des avantages importants de la structure proposée tient en ce que le déflecteur multicanaux de sortie assure une réinjection active, ce qui donne une efficacité de réinjection indépendante du nombre N de fibres par barrette, et meilleure que l'efficacité d'une réinjection passive dès que le nombre N de fibres par barrette dépasse 4.

Cette réinjection active assure également de meilleures performances en termes de diaphotie. En effet, le déflecteur de sortie, pour chaque canal de sortie, sélectionne la provenance du signal optique à réinjecter. De la sorte, le rapport signal à diaphotie obtenu est de l'ordre du carré de celui d'une architecture à réinjection passive, ce qui correspond à environ 60 décibels.

Par ailleurs, on notera que l'architecture proposée, dans sa version multiple, est susceptible de trouver avantageusement application pour les réseaux de transport optique multicolores (ou multilongueurs d'onde). En effet, un brasseur optique sépare d'abord des longueurs d'onde des fibres d'entrée, puis commute spatialement les signaux ainsi obtenus. Un commutateur spatial doit être associé à chaque longueur d'onde, et il est donc très intéressant de pouvoir juxtaposer autant de commutateurs spatiaux qu'il y a des longueurs d'onde multiplexées sur chaque fibre d'entrée du brasseur.

Notamment, dans sa version multiple, l'architecture propose un gain appréciable en compacité lorsque plusieurs commutateurs spatiaux doivent être utilisés en parallèle, comme dans le cas d'un brasseur optique.

On notera également qu'un système multiple Mx(NxN) est aussi simple à fabriquer qu'un système NxN car les 2M sous-ensembles à fabriquer (barrette de fibres et microlentilles + déflecteur multicanaux) sont identiques et se prêtent donc bien à une fabrication en série. On peut même envisager des procédures de préalignement optique de chaque sous-ensemble, procédures qui seront identiques pour tous les sous-ensembles, et simplifieront l'alignement du système complet lorsque tous les sous-ensembles sont juxtaposés autour de la lentille de Fourier.

On notera par ailleurs qu'un autre avantage des structures qui viennent d'être décrites tient en ce que les matériaux acousto-optiques qu'elles utilisent permettent de travailler aux longueurs d'onde de télécommunication et notamment à 1,3 et 1,55 *µ*m.

## Revendications

1. Système de commutation optique spatiale comportant un déflecteur (DM) acousto-optique multicanaux d'entrée entre une pluralité de fibres (f) d'entrée et une pluralité de fibres (f) de sortie une pluralité de microlentilles d'entrée (B_{L}) permettant de collimater les faisceaux issus des fibres (f) d'entrée sur le déflecteur (DM) d'entrée, et en aval du déflecteur (DM) d'entrée, une lentille de Fourier (L) au plan focal objet de laquelle ledit déflecteur (DM) d'entrée est disposé, ledit système étant **caractérisé en ce qu'**il comporte :
- un déflecteur (DM) acousto-optique multicanaux de sortie disposé en aval au plan focal image de ladite lentille de Fourier,
- ainsi qu'une pluralité de microlentilles de sortie (B_{L}) permettant de focaliser les faisceaux issus du déflecteur (DM) de sortie sur les fibres (f) de sortie,
et **en ce que** ladite lentille de Fourier (L) est adaptée à collimater les faisceaux issus dudit déflecteur d'entrée afin qu'ils aient la même taille dans le déflecteur de sortie que dans le déflecteur d'entrée; et
**en ce que** les déflecteurs (DM) de part et d'autre de la lentille (L) sont identiques et sont adaptés à être commandés par un même peigne de fréquences ultrasoniques.

2. Système selon la revendication 1, **caractérisé en ce que** la lentille de Fourrier (L) est invariante par rotation autour de son axe optique.

3. Système selon l'une quelconque des revendications précédentes, **caractérisé en ce que** le sous-ensemble constitué de la pluralité de fibres et microlentilles d'entrée, ainsi que du déflecteur disposé au plan focal objet de la lentille (L) est identique au sous-ensemble constitué de la pluralité de fibres et microlentilles de sortie, ainsi que du déflecteur disposé au plan focal image de la lentille (L).

4. Système selon la revendication 3, **caractérisé en ce que** les déflecteurs (DM) de part et d'autre de la lentille (L) sont tournés de 90° l'un par rapport à l'autre autour de l'axe optique de ladite lentille.

5. Système selon l'une quelconque des revendications précédentes, **caractérisé en ce que** le matériau acousto-optique des déflecteurs (DM) est l'arséniure de gallium.

6. Système selon l'une quelconque des revendications 1 à 4; **caractérisé en ce que** le matériau acousto-optique des déflecteurs (DM) est le phosphure d'indium.

7. Système de commutation optique spatiale, **caractérisé en ce qu'**il comporte une pluralité de modules constitués de systèmes selon la revendication 1 dont la lentille de Fourrier est commune.

8. Utilisation d'un système selon l'une quelconque des revendications précédentes dans le domaine des télécommunications optiques.

9. Utilisation selon la revendication 8, **caractérisée en ce que** la/les longueur/s d'onde de fonctionnement du système est/sont situé/s autour de 1,3 µm ou 1,55 µm.

## Claims

1. Spatial optical switching system comprising an input multichannel acoustooptic deflector (DM) between a plurality of input fibres (f) and a plurality of output fibres (f), a plurality of input microlenses (B_{L}) for collimating the breams coming from the input fibres (f) onto the input defector (DM) , and downstream of the input defector (DM) a Fourier lens (L) in the objet focal plane of which said input deflector (DM) is placed, said system being **characterized in that** it includes:
- an output multichannel acoustooptic deflector (DM) placed downstream of the image focal plane of said Fourier lens; and
- a plurality of output microlenses (B_{L}) for focussing the beams coming from the output deflector (DM) onto the output fibres (f),
**in that** said Fourier lens (L) is designed two collimater the breams coming from said input deflector so that they are the same size in the output deflector as in the input deflector and **in that** the deflectors (DM) on either side of the lens (L) are identical and are designed to be controlled by one and the same ultrasonic frequency comb.

2. System according to Claim 1, **characterized in that** the Fourier lens (L) is invariant under rotation about its optical axis.

3. System according to either of the preceding claims, **characterized in that** the subassembly consisting of the plurality of fibres, the input microlenses and the deflector lying in the objet focal plane of the lens (L) is identical to the subassembly consisting of the plurality of fibres, the output microlenses and the defector lying in the image focal plane of the lens (L).

4. System according to Claim 3, **characterized in that** the deflectors (DM) on either side of the lens (L) are rotated through 90° with respect to the other about the optical axis of said lens.

5. System according to any one of the preceding claims, **characterized in that** the acoustooptic maternal of the defectors (DM) is gallium arsenide.

6. System according to any one of Claims 1 to 4, **characterized in that** the acoustooptic material of the deflectors (DM) is indium phosphide.

7. Spatial optical switching system, **characterized in that** it comprises a plurality of modules consisting of system according to Claim 1, the Fourier lens of which is common.

8. Use of a system according to any one of the preceding claims in the optical telecommunications field.

9. Use according to Claim 8, **characterized in that** the operating wavelength(s) of the system is (are) located around 1.3 µm or 1.55 µm.

## Patentansprüche

1. System zum räumlichen optischen schalten, das einen akustooptischen Mehrkanal-Eingangsdeflector (DM) zwischen mehreren Eingangsfasern (f) und mehreren Ausgangsfasern (f), mehrere Eingangsmikrolinsen (B_{L}), die das Parallelrichten der von den Eingangsfasern (f) ausgegebenen Strahlenbündel auf dien Eingangsdeflektor (DM) ermöglichen, und am Ausgang des Eingangsdeflektors (DM) eine Fourier-Linse (L), in deren Objekt-Brennebene der Eingangsdeflektor (DM) angeordnet ist, enthält, wobei das System **dadurch gekennzeichnet ist, dass** es enthält:
- einen akustooptischen Mehrkanal-Ausgangsdeflek - tor (DM), der am Ausgang der Bild-Brennebene der Fourier-Linse angeordnet ist, und
- mehrere Ausgangsmikrolinsen (B_{L}), die das Fokussieren der von dem Ausgangsdeflektor (DM) ausgegebenen Strahlenbündel auf die Ausgangsfasern (f) ermöglichen,
und dass die Fourier-Linse (L) so ausgebildet ist, dass sie die von dem Eingangsdeflektor ausgegebenen Strahlenbündel parallel richtet, damit sie die gleiche Größe im Ausgangsdeflektor wie jene im Eingangsdeflektor haben,
und dass die Reflektoren (DM) beiderseits der Linse (L) übereinstimmen und so beschaffen sind, dass sie durch denselben Ultraschallfrequenzkamm gesteuert werden.

2. System nach Anspruch 1, **dadurch gekennzeichnet, dass** die Fourier-Linse (L) um ihre optische Achse drehinvariant ist.

3. System nach einem der vorergehenden Ansprüche, **dadurch gekennzeichnet, dass** die aus den mehreren Eingangsfasern und -mikrolinsen sowie aus dem in der Objekt-Brennebene der Linse (L) angeordneten Deflektor gebildet Untergesamtheit mit der aus den mehreren Ausgangsfasern und - mikrolinsen sowie aus dem in der Bild-Brennebene der Linse (L) angeordneten Deflektor gebildeten Untergesamtheit übereinstimmt.

4. System nach Anspruch 3, **dadurch gekennzeichnet, dass** die Deflektoren (DM) beiderseits der Linse (L) um die optische Achse der Linse relativ zueinander um 90° gedreht sind.

5. System nach einem der vorhergehenden Ansprüche, **dadurch gekennzeichnet, dass** das akustooptische Material der Reflektoren (DM) Galliumarsenid ist.

6. System nach einem der Ansprüche 1 bis 4, **dadurch gekennzeichnet, dass** das akustooptische Material der Deflektoren (DM) Indiumphosphid ist.

7. System zum räumlichen optischen Schalten, **dadurch gekennzeichnet, dass** es mehrere Module enthält, die aus systemen nach Anspruch 1 gebildet sind und die die Fourier-Linse gemeinsam haben.

8. Verwendung eines Systems nach einem der vorhergehenden Ansprüche auf dem Gebiet der optischen Telekommunikation.

9. Verwerdung nach Anspruch 8, **dadurch gekennzeichnet, dass** die Betriebswellenlänge des Systems um 1,3 µm oder µm 1,55 µm liegt.
